# FASCICULE DE BREVET EUROPEEN

(11) **EP 1 338 488 B1**
(45) Date de publication et mention de la délivrance du brevet: **14.07.2010**
(21) Numéro de dépôt: 03003859.0
(22) Date de dépôt: 20.02.2003
(51) Int. Cl.: B60T 7/04, B60T 11/20, B60T 13/68, B60T 8/40

(54) **Maître-cylindre pour systeme de freinage electro-hydraulique**
Hauptbremszylinder für elektro-hydraulisches Bremssystem
Master-cylinder for electro-hydraulic brake system

(30) Priorité: 25.02.2002 FR 0202440
(43) Date de publication de la demande: 27.08.2003
(73) Titulaire: ROBERT BOSCH GMBH, 70442 Stuttgart (DE)
(72) Inventeur: Anderson, Chris, 75002 Paris (FR)
(74) Mandataire: Hurwic, Aleksander Wiktor

(56) Documents cités:
- WO-A-01/68427
- WO-A-01/72566
- DE-A- 10 026 309
- DE-A- 19 952 778
- US-B1- 6 192 685

## Description

La présente invention se rapporte principalement à un maître-cylindre pour système de freinage électro-hydraulique comportant des moyens améliorés de simulation de la sensation pédale et à un système de freinage électro-hydraulique comportant un tel maître-cylindre.

Les systèmes de freinage électro-hydrauliques comportent un maître-cylindre simulant, en fonctionnement normal, la réaction mécanique d'un circuit de freinage classique ressentie à la pédale de frein par un conducteur, et des moyens de détection de l'action du conducteur sur la pédale de frein envoyant l'information à un calculateur qui génère l'ordre à une pompe hydraulique d'envoyer du liquide de frein sous pression aux freins. En fonctionnement dégradé, par exemple lorsque la pompe ne répond pas, le maître-cylindre alimente en liquide de frein sous pression les freins comme dans un circuit de freinage classique.

Les maître-cylindre pour système de freinage électro-hydraulique de type connu, voir par exemple US-B-6 192 685, comportent un corps de forme sensiblement cylindrique dans lequel est pratiqué un alésage divisé en au moins une chambre d'alimentation et en une chambre de travail par un piston monté à coulissement étanche dans l'alésage et actionné par une tige d'actionnement reliée à un pédale de frein Le piston permet au repos une communication entre les deux chambres et une séparation étanche des deux chambres lors d'une action de freinage. La chambre d'alimentation est raccordée de manière étanché à un réservoir de liquide de frein et la chambre de travail est en fonctionnement normal raccordée à une cartouche de simulation de la sensation pédale ou cartouche de sensation pédale et en fonctionnement dégradée à au moins un frein disposé au niveau d'une roue.

La cartouche de sensation pédale comporte une enveloppe délimitant une chambre sensiblement cylindrique dans lequel coulisse un piston soumis en fonctionnement normal lors d'une phase de freinage par une première face au liquide de frein sous pression fourni par la chambre de travail et par une deuxième face à une première extrémité d'un moyen élastique, la seconde extrémité du moyen élastique étant en appui contre le fond de la chambre opposée au piston. Le moyen élastique permet de simuler la réaction mécanique d'un circuit de freinage classique, qui correspond à une relation liant la force à la pédale en fonction de la course de la pédale. La courbe caractéristique de cette relation comporte au moins une première partie correspondant à l'absorption du circuit de freinage en début de phase de freinage, puis une seconde partie correspondant à une réaction de plus en plus importante avec l'augmentation du niveau de freinage.
Les moyens élastiques de type connu utilisés dans les cartouches de sensation pédale sont par conséquent très complexes et coûteux, ils comportent par exemple plusieurs ressorts hélicoïdaux, de charges différentes, à pas constant et à pas variable, des éléments en élastomère pour simuler l'absorption du circuit. De plus le montage est long et augmente par conséquent le prix de revient du fait du grand nombre de pièces nécessaires pour simuler correctement une réaction pédale classique.

Les systèmes de freinage électro-hydrauliques permettent une excellente maîtrise du freinage et du véhicule, cependant les moyens de simulation de la réaction du circuit de freinage sont relativement complexes et demandent un ajustement précis, leur application à une large gamme de véhicules n'est alors pas envisageable.

De plus, les équipementiers automobiles souhaitent standardiser le plus possible les composants constituant les systèmes de freinage. Cependant chaque type de véhicule automobile a une sensation pédale caractéristique, ce qui implique actuellement de modifier de manière importante les moyens de simulation de la sensation pédale pour chaque type de véhicule automobile.

Il serait particulièrement intéressant pour le conducteur du véhicule de pouvoir modifier la sensation pédale suivant le type de conduite souhaité ce qui est actuellement impossible avec les moyens existants. En particulier, lorsque le véhicule automobile est conduit par plusieurs personnes souhaitant un confort de freinage différent, il serait possible de mémoriser dans le calculateur du véhicule les réglages du dispositif de sensation pédale relatifs à chaque personne susceptible d'utiliser le véhicule automobile et d'opérer le réglage automatique lors de l'identification du conducteur.

Il est envisageable de réduire le nombre d'éléments constituant la cartouche de simulation, par exemple en utilisant un seul ressort.

L'utilisation de ressorts de type hélicoïdal à pas régulier ne conviennent pas, puisque ceux-ci ont un coefficient de raideur k constant, la contrainte de déformation Fd est reliée de manière linéaire à la déformation axiale x par la relation Fd = k*x, cette relation étant valable tant que le ressort se déforme élastiquement.

Il existe également des ressorts à pas variable dont la contrainte de déformation est reliée de manière non linéaire à la déformation axiale du ressort et dont la caractéristique se rapproche de celle d'un circuit de freinage classique, cependant ces ressorts ne permettent pas un ajustement de la sensation pédale simulée suivant le type de véhicule et/ou le conducteur.

C'est par conséquent un but de la présente invention d'offrir un maître-cylindre pour système de freinage électro-hydraulique de constitution simple et permettant une sensation pédale simulée très proche de la réaction d'un circuit de freinage classique.

C'est également un but de la présente invention d'offrir un maître-cylindre pour système de freinage électro-hydraulique permettant d'être appliquer facilement à différents modèles de véhicules automobiles.

C'est également un but de la présente invention d'offrir un maître-cylindre pour système de freinage électro-hydraulique dont la sensation pédale simulée est ajustable simplement.

C'est également un but de la présente invention d'offrir un maître-cylindre pour système de freinage électro-hydraulique utilisables pour plusieurs modèles de véhicule automobile.

Ces buts sont atteints par un maître-cylindre comportant une cartouche de simulation de la sensation pédale comportant un moyen élastique reproduisant la réaction d'un circuit de freinage classique, le moyen élastique comportant un ressort hélicoïdal et un moyen d'entretoise disposé entre au moins deux spires consécutives du ressort hélicoïdal portant deux surfaces d'appui axialement opposées pour les deux spires et modifiant la raideur du moyen élastique lorsque les spires viennent en appui sur le moyen d'entretoise.

En d'autres termes, le moyen élastique comporte un ressort muni de plusieurs spires, couplé à une entretoise intercalée entre plusieurs spires du ressort, formant ainsi des pairs de spires du ressort séparées par une spire d'entretoise ; lors de l'augmentation de la charge subit par le ressort, les spires du ressort viennent progressivement et continûment en contact avec les parties d'entretoise disposées entre chaque pair de spires, provoquant une augmentation progressive et continue de la raideur du moyen élastique et ainsi une réaction à la pédale de frein proche de la réaction d'un circuit de freinage classique.

En effet la raideur du moyen élastique détermine la réaction de la cartouche de simulation de la sensation pédale, la raideur du moyen élastique étant inversement proportionnelle au nombre de spires actives du ressort hélicoïdal, sont appelées spires actives les spires se déplaçant axialement relativement aux autres spires lorsqu'une charge est appliquée au ressort.

Par conséquent lors d'une mise sous charge du moyen élastique selon la présente invention, des zones de spires du ressort viennent progressivement en contact du moyen d'entretoise jusqu'à ce que lesdites zones de spires deviennent fixent relativement à la zone dé spire la suivant ou la précédent dans le sens d'application de la charge, la zone de spire suivante ou précédente étant une zone de spire « désactivée » et formant support pour la désactivation de la zone de spire active.

Avantageusement, l'entretoise est à section variable selon l'axe du ressort, ce qui permet par conséquent d'avoir une variation de la modification de la raideur du moyen élastique offrant une réaction très proche d'une réaction d'un circuit de freinage classique.

De plus, la réaction ressentie à la pédale de frein est modifiable, en modifiant la position relative du moyen d'entretoise relativement au ressort, on peut alors prévoir un dispositif permettant par exemple de modifier la variation de raideur du moyen élastique, avantageusement commandé par un calculateur du système de freinage.

La présente invention a principalement pour objet un maître-cylindre pour systèmes de freinage électro-hydraulique comportant un corps d'axe longitudinal percé d'un alésage, un piston monté à coulissement étanche dans l'alésage et divisant axialement l'alésage en une chambre d'alimentation raccordée de manière étanche à un réservoir de liquide de frein et en une chambre de travail, ledit piston étant commandé par une tige d'actionnement reliée à une pédale de frein, et une cartouche de simulation de la réaction d'un circuit de freinage à la pédale, ladite chambre de travail étant en communication en fonctionnement normal avec l'intérieur de la cartouche de simulation de la sensation pédale et en fonctionnement dégradé avec au moins un frein disposé au niveau d'une roue, ladite cartouche comportant un piston susceptible d'être soumis par une première face au liquide de frein sous pression fourni par la chambre de travail , et soumis par une seconde face à un moyen élastique à raideur variable caractérisé en ce que le moyen élastique comporte au moins un ressort hélicoïdal et un moyen d'entretoise disposé entre au moins deux spires dudit ressort et permettant l'appui desdites spires sur ledit moyen d'entretoise au delà d'une valeur prédéterminée de pression du liquide de frein dans la chambre de travail .

La présente invention a également pour objet un maître-cylindre caractérisé en ce que le moyen d'entretoise est formé par une hélice formant des spires

La présente invention a également pour objet un maître-cylindre caractérisé en ce que l'hélice de la cartouche a une section de dimension selon l'axe longitudinale continûment croissante ou décroissante par portion d'hélice.

La présente invention a également pour objet un maître-cylindre caractérisé en ce que le moyen d'entretoise est réalisé en matière plastique.

La présente invention a également pour objet un maître-cylindre caractérisé en ce que le ressort hélicoïdal est à pas régulier.

La présente invention a également pour objet un maître-cylindre caractérisé en ce que le moyen d'entretoise comporte une seconde extrémité longitudinale monté fixe par rapport au piston de la cartouche .

La présente invention a également pour objet un maître-cylindre caractérisé en ce que la cartouche comporte des moyens d'ajustement de la sensation pédale simulée par modification de la position axiale du moyen d'entretoise relativement au ressort .

La présente invention a également pour objet un maître-cylindre caractérisé en ce que lesdits moyens d'ajustement comporte un moteur électrique pas à pas permettant un déplacement longitudinal et en rotation du moyen d'entretoise .

La présente invention a également pour objet un système de freinage électro-hydraulique comportant des moyens de détection de l'action de freinage du conducteur, un calculateur recevant les informations des moyens de détection et générant des ordres de commande pour provoquer l'actionnement d'au moins un frein disposé au niveau d'une roue, un générateur de pression recevant l'ordre du calculateur d'envoyer du liquide sous pression dans les freins , un maître-cylindre permettant la simulation de la sensation pédale en fonctionnement normal et servant de source de liquide de frein sous pression en fonctionnement dégradé, et des électrovannes pour interrompre la communication entre ledit maître-cylindre et les freins en fonctionnement normal, caractérisé en ce que ledit maître-cylindre est un maître-cylindre selon l'invention.

La présente invention a également pour objet un système de freinage caractérisé en ce que le générateur de pression est une pompe électrique.

La présente inventions sera mieux comprise à l'aide de la description qui suit et des dessins annexées pour lesquels l'avant, l'arrière, la partie supérieure et la partie inférieure correspondent respectivement à la gauche, la droite, le haut et le bas des dessins et pour lesquels :

Les mêmes références seront utilisées pour des éléments ayant sensiblement la même forme ou sensiblement la même fonction
La figure 1 est une vue en coupe longitudinale d'un maître-cylindre pour système de freinage électro-hydraulique de l'état de la technique ;
La figure 2 est une courbe caractéristique d'une sensation pédale d'un circuit hydraulique classique ;
La figure 3 est une vue en coupe schématisée d'un détail d'un maître-cylindre selon la présente invention.

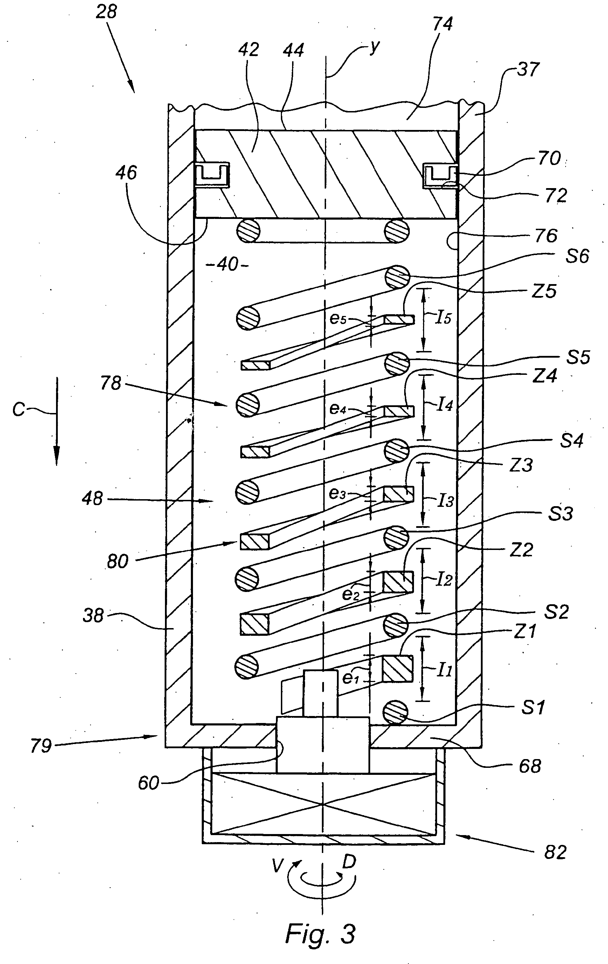

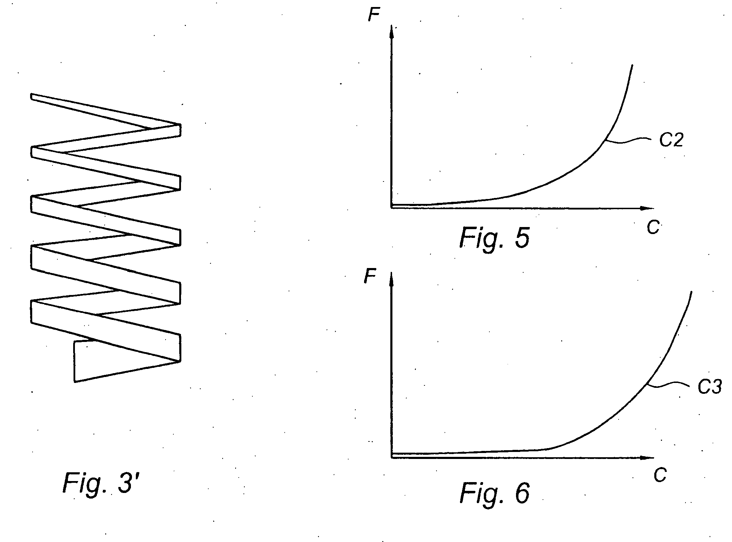

La figure 3' est une vue en perspective d'un élément de la figure 3 ;

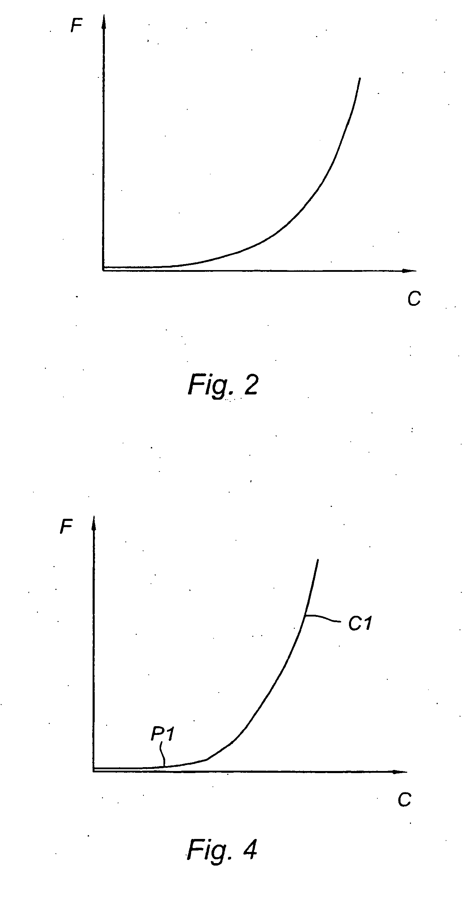

Les figures 4, 5, 6 sont des courbes caractéristiques d'une sensation pédale obtenue avec le maître-cylindre selon la présente invention pour différents ajustages ;

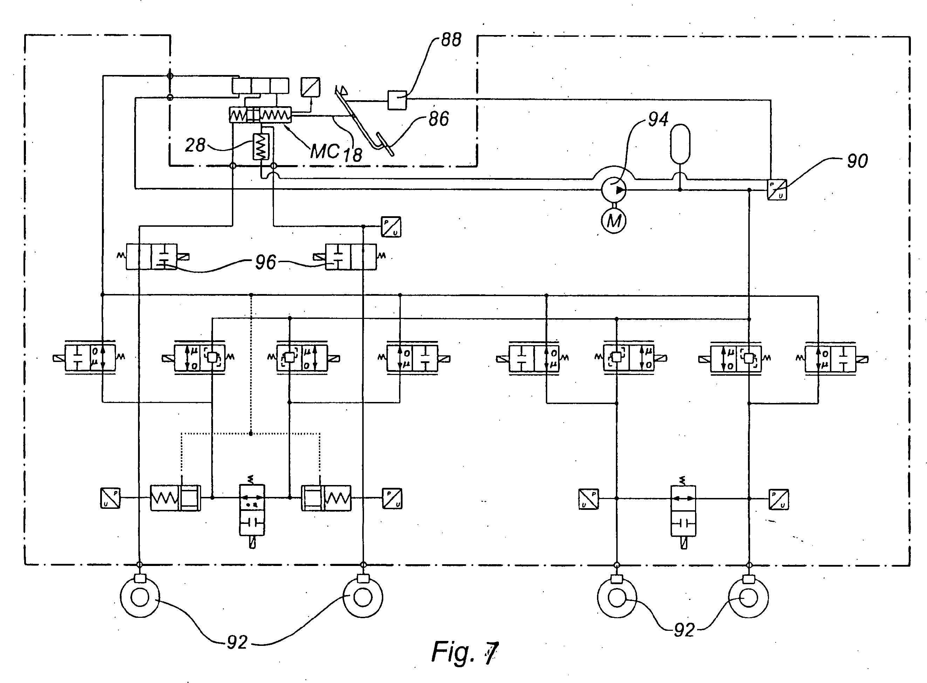

La figure 7 est un schéma d'un système de freinage électro-hydraulique selon la présente invention.

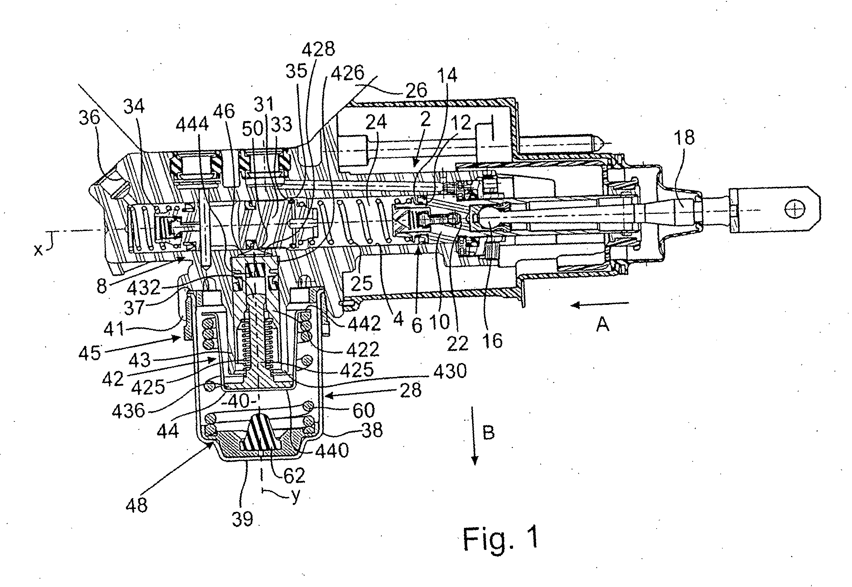

Sur la figure 1, on peut voir un maître-cylindre de type connu comportant un corps 2 d'axe longitudinal X percé d'un alésage 4 d'axe X borgne, divisé en un circuit hydraulique primaire 6 et en un circuit hydraulique secondaire 8. Les circuits hydrauliques primaire et secondaire étant de structure proche nous ne décrirons que le circuit primaire 6.
Le circuit primaire 6 comporte un piston hydraulique 10 monté à coulissement étanche dans l'alésage 4 au moyen de joint à lèvre 12 monté dans un gorge annulaire 14 pratiquée sur la périphérie du piston 10. Le piston 10 reçoit dans sa partie arrière une extrémité longitudinale avant 16 d'une tige d'actionnement 18 conformée en rotule, la tige d'actionnement étant reliée par un extrémité longitudinale arrière 20 à une pédale de frein (non représentée) disposée dans l'habitacle du véhicule. La piston 10 divise l'alésage 4 en une chambre d'alimentation 22 disposée en arrière du piston 10 et en une chambre de travail 24 en avant du piston 10. La chambre d'alimentation est raccordée par des moyens étanches 24 à un réservoir de liquide de frein 26 et la chambre de travail est raccordée en fonctionnement normal à une cartouche de simulation de la sensation pédale 28 et en fonctionnement dégradé à des freins disposés au niveau des roues.

Le piston 10 comporte dans sa partie centrale un passage longitudinal 30 muni d'un clapet 32 mettant au repos en communication la chambre d'alimentation et la chambre de travail et isolant les deux chambres 22,24 lors d'un phase de freinage.

Un moyen de rappel 25 du piston 10 est disposé dans la chambre de travail primaire 24.

A l'inverse du circuit primaire 6, le circuit secondaire n'est jamais relié de manière hydraulique à la cartouche 28. En effet en fonctionnement normal, la chambre de travail secondaire 34 est isolée du circuit de freinage et en fonctionnement dégradé, la chambre de travail secondaire est reliée aux freins par un canal 36 ouvert à l'état repos et à l'été dégradé et reliant la chambre de travail secondaire 34 aux freins.

Le piston secondaire 31 comporte un joint torique 35 sur sa périphérie extérieure coopérant en fonctionnement dégradé avec un épaulement 33 pratiqué sur la périphérie de l'alésage 4 et interrompant la communication entre la chambre de travail 24 et l'intérieur de la cartouche 28.

La cartouche de simulation de la sensation pédale 28 d'axe Y sensiblement perpendiculaire à l'axe X du corps du maître-cylindre comporte un enveloppe 38 en forme sensiblement de U. L'enveloppe comporte une extrémité ouverte 37 fixée de manière étanche au corps du maître-cylindre et un fond 39, et définit une chambre intérieure 40 dans lequel est monté à coulissement étanche un piston 42 soumis sur une première face 44 à la pression régnant dans la chambre de travail primaire 24 et sur une seconde face 46 opposée à la première face 44 à la réaction d'un moyen élastique 48.
L'acheminement du liquide de frein de la chambre de travail 24 à la cartouche s'effectue par un canal 50 pratiqué dans le corps du maître-cylindre sensiblement perpendiculairement à l'axe X.
Le corps du maître-cylindre 2 comporte un premier 43 et un second 41 manchons coaxiaux d'axe Y, le premier manchon 43 borde le canal 50 et reçoit à coulissement étanche une partie du piston 42, le second, manchon 41 entour le premier manchon 43 et comportent des moyens de fixation 45 de la cartouche au corps du maître-cylindre par exemple vis écrou 45.

Le piston 42 est composite et comporte une première partie tubulaire 422 en coulissement étanche dans le premier manchon 43 au moyen de joint à lèvres disposées dans une gorge 424 pratiquée dans la périphérique extérieure de la première partie 422. La première partie tubulaire 422 comporte une première extrémité longitudinale 426 obturée par un fond 428 en regard du canal 50 et une seconde extrémité longitudinale 430 opposées à la première extrémité 426 recevant une seconde partie 425 du piston 42 en forme de T orientée vers le bas, le pied du T 432 étant montée à coulissement dans la première partie tubulaire 422. Un ressort hélicoïdal 434 est monté en compression entre la tête 436 du T 425 et un épaulement pratiqué dans la première partie tubulaire 422. Le piston 42 comporte également une troisième partie 438 en forme de U orienté de bas en haut sur la figure, et entourant le premier manchon 43, le fond 440 du U 438 recevant la tête 436 de la seconde partie 425. La troisième partie comporte à son extrémité supérieure ouverte une collerette 442 s'étendant radialement vers l'extérieur.

Un plot élastique 444, par exemple en élastomère est disposé entre le fond 428 de la première partie 422 et le pied du T 432.

Le moyen élastique 48 de simulation de la sensation pédale comporte le premier ressort hélicoïdal 434 à pas constant, un ressort hélicoïdal 60 à pas variable monté en compression entre le fond 39 de l'enveloppe et le collerette 442 et un téton 62 en élastomère pincé entre le fond 39 de la cartouche et une extrémité longitudinale inférieure 64 du ressort 60, ledit téton assurant la simulation de la sensation de la réaction à la pédale en freinage maximal en fin de course pour un circuit de freinage classique.

Les ressorts 434,60, lors d'une action de freinage, travaillent dans leur domaine de déformation élastique.

Nous allons maintenant décrire rapidement le fonctionnement du maître-cylindre de l'état de la technique.

Lors d'une application sur la pédale de frein, le piston 10 se déplace suivant la direction indiquée par la flèche A à l'encontre du ressort 25 provoquant la fermeture du clapet 32 et l'isolation des chambres 22 et 24, le volume de la chambre de travail 24 se réduisant, la pression augmente dans la chambre de travail agissant sur la première face 44 du piston 42. Lorsque la pression dans la chambre de travail 24 dépasse une valeur prédéterminée le piston 42 se déplace selon la flèche B à l'encontre du ressort 434, puis du ressort 60.
Tout d'abord, le ressort 434 permet de simuler l'absorption d'un circuit de freinage classique, puis du fait de la variabilité du pas du ressort 60, la relation entre le déplacement du piston 42 et la pression appliquée sur la première face 44 du piston 42 n'est pas linéaire et se rapproche de la réaction d'un circuit de freinage classique (figure 2)
En fin de course, correspondant un effort de freinage maximum, le piston vient écrasé le téton 62 par la petite base 54 ce qui simule la saturation dans un circuit de freinage classique.
Le piston du circuit secondaire ne se déplace pas.

En fonctionnement dégradé, le canal 36 du circuit secondaire est ouvert et le déplacement du piston primaire 10 provoque le déplacement du piston secondaire 31 qui ferme la communication entre la chambre de travail 24 et la cartouche 28 par application du joint torique 35 contre l'épaulement 33.. Le maître-cylindre fonctionne alors comme un maître-cylindre classique.

Le maître-cylindre tel que décrit précédemment donne satisfaction cependant il est d'une réalisation complexe et il ne permet pas de modifier la réaction simulée par la cartouche.

Il existe également des systèmes de freinage électro-hydrauliques comportant un maître-cylindre monocircuit, c'est-à-dire ne comportant qu'un seul piston de pression et par conséquent une seule chambre de travail raccordée en fonctionnement normal à la cartouche de sensation pédale et alimentant en cas de défaillance deux ou quatre freins disposés au niveau des roues.

Sur la figure 3, on peut voir un cartouche de simulation de la sensation pédale 32 selon la présente invention. Le maître-cylindre est identique à celui décrit précédemment, par conséquent nous ne décrirons que la cartouche 32.

La cartouche 32 selon la présente invention comporte une enveloppe 38 d'axe Y ayant sensiblement la forme d'un U, la partie supérieure du U formant une première extrémité longitudinale 37 ouverte de la cartouche qui est reliée de manière étanche au corps 2 du maître-cylindre. Une seconde extrémité longitudinale opposée à la première extrémité 37 formant le fond 39 de la cartouche est avantageusement percée d'un orifice 66 bordé par une collerette sensiblement annulaire 68 et permettant le passage d'un moyen de réglage.

L'enveloppe 38 définit une chambre intérieure 40 dans laquelle est monté à coulissement étanche un piston 42, l'étanchéité étant réalisée par exemple au moyen d'un joint à lèvres 70 monté fixe dans une gorge annulaire 72 pratiquée sur la périphérie du piston 42 en regard de la surface latérale intérieure de la chambre 40, la forme du piston 42 n'est bien entendu pas limitative, et l'emploi d'un piston tel que représenté à la figure 1 ne sort pas du cadre de la présente invention.

Le piston 42 divise de manière étanche la chambre 40 en une chambre supérieure hydraulique 74 délimitée en partie par une première face 44 du piston 42 et en une chambre inférieure « sèche » 76 délimitée par une seconde face 46 du piston 42, la chambre 76 est qualifiée de « sèche » puisque à l'inverse de la chambre 74, elle ne reçoit pas de liquide de frein.

L'enveloppe 38 comporte également un moyen élastique 48 monté dans la chambre inférieure 76, le moyen élastique comportant au moins un ressort hélicoïdal 78 d'axe Y monté en compression entre la seconde face 46 du piston 42 et un fond 79 de l'enveloppe, avantageusement formé par une surface annulaire 68 délimitant un orifice 60.
Le ressort 78 selon le mode de réalisation représenté est un ressort hélicoïdal à pas régulier, ce qui signifie que le ressort 78 comporte des premières spires Sn espacées d'un intervalle de dimension constante, dans l'exemple représenté il comporte les spires S1, S2, S3, S4, S5, S6 espacées respectivement par des intervalles I1, I2, I3, I4, I5 de longueur d constante.

Cependant il est envisageable de prévoir un ressort hélicoïdal à pas variable, un ressort hélicoïdal cylindrique ou conique, à spires à section circulaire ou rectangulaire.

Le ressort 78, lors d'une action de freinage travail dans son domaine de déformation élastique.

Le moyen élastique 48 comporte également un moyen d'entretoise 80 (figure 3') d'axe Y de forme avantageusement hélicoïdale comportant des secondes spires Zn, dans l'exemple représenté il comporte Z1, Z2, Z3, Z4, Z5. Le moyen d'entretoise 80 est apte à coopérer avec le ressort 78 de manière à ce que les secondes spires Z1, Z2, Z3, Z4, Z5 soient disposées respectivement dans les intervalles I1, I2, I3, I4, I5.

Les spires Zn du moyen d'entretoise 80 sont de dimension transversale suffisante pour permettre l'appui des spires Sn du ressort hélicoïdal 78.

Si le ressort 78 est conique, il est avantageux que le moyen d'entretoise 80 soit de conicité sensiblement égale à celle du ressort 78.

Le moyen d'entretoise 80 comporte une extrémité supérieure libre (non représentée) et une extrémité inférieure 83 fixée soit à un bouchon obturant l'orifice 60 après la mise en place du moyen d'entretoise , soit à des moyens d'ajustement 82 de sensation pédale simulée.

Il est bien entendu que le ressort 78 peut comporter un nombre de spires Sn quelconque et le moyen d'entretoise peut comporter un nombre de spires différent de celui du nombre d'intervalles In

Dans le mode de réalisation représentée, l'hélice formant le moyen d'entretoise 80 est muni de spires de dimension axiale e selon l'axe Y continûment décroissante selon la direction de la flèche C. Les section de spires référencées Z1, Z2, Z3, Z4, Z5 visible sur la figure 3
sont respectivement de dimension axiale e1, e2, e3, e4, e5, e2 étant inférieure à e1, e3 étant inférieure à e2, e4 étant inférieure à e3 et e5 étant inférieure à e4.

Il est bien entendu que le moyen d'entretoise peut être disposé dans l'enveloppe 38 et entre les spires du ressort 78 dans le sens inverse de manière que l'hélice formant le moyen d'entretoise 80 soit de dimension axiale e selon l'axe Y continûment croissante selon la direction de la flèche C.

Il est également bien entendu qu'un moyen d'entretoise 80 formé par une hélice de dimension axiale selon l'axe Y variant de manière non monotone ne sort pas du cadre de la présente invention.

L'hélice a avantageusement une section transversale rectangulaire, cependant une hélice ayant par exemple une section circulaire ou elliptique ne sort pas du cadre de la présente invention.

Il est également bien entendu qu'il n'est pas nécessaire que toutes les intervalles In comporte une spires Zn du moyen d'entretoise 80.

n est un nombre entier positif supérieur ou égal à un.

Le moyen d'entretoise 80 est avantageusement réalisé en matière plastique se déformant faiblement de manière élastique dans le domaine de travail du moyen élastique 48, cependant l'usage par exemple de matériaux métalliques ou de tout autre matériau permettant un rapprochement élastique des spires Zn du moyen d'entretoise et formant cependant une entretoise rigide entre les spires Sn du ressort 78 ne sort pas du cadre de la présente invention.

Le mode de réalisation tel que représenté comporte également les moyens d'ajustement 82 de sensation pédale simulée permettant de modifier en particulier la première partie de la caractéristique effort-course et ceci en modifiant l'indexation des spires Z1, Z2, Z3, Z4, Z5 dans les intervalles I1, I2, I3, I4, I5, en modifiant la position axiale du moyen d'entretoise 80 relativement au ressort 78, en particulier la situation des spires Z1, Z2, Z3, Z4, Z5 dans les intervalles I1, I2, I3, I4, I5, ce qui modifie l'épaisseur de la partie d'entretoise disposée entre les spires du ressort 78.
Ainsi les moyens d'ajustement 82 permettent de déplacer la spire Zn de l'intervalle In en direction de l'intervalle In+1 ou In-1 suivant la modification de la sensation pédale recherchée, par exemple la spire Z5 est susceptible d'être déplacée de l'intervalle I5 vers l'intervalle I4 et ainsi de suite.

Les moyens d'ajustement 82 comportent par exemple un moteur électrique pas à pas permettant de visser dans le sens de la flèche V ou de dévisser dans le sens de la flèche D le moyen d'entretoise 80 dans le ressort 78, les spires Z1, Z2, Z3, Z4, Z5 formant le pas de vis et les intervalles I1, I2, I3, I4, I5 formant le taraudage.

Nous allons maintenant décrire le fonctionnement de la cartouche de simulation de la sensation pédale selon la présente invention, pour cela nous allons considérer le déplacement des spires S1, S2, S3, S4, S5, S6 sous une charge appliquée au moyen élastique en particulier au ressort hélicoïdal. Lorsque nous parlerons d'une mise en contact des spires Sn et des spires Zn, il est bien entendu qu'il s'agit d'une mise en contact progressive et continue de zones de spires Sn avec des zones de spire Zn.

Lors d'une application sur la pédale de frein, le piston 10 se déplace suivant la flèche A à l'encontre du ressort 25 provoquant la fermeture du clapet 32 et l'isolation des chambres 22 et 24, le volume de la chambre de travail 24 se réduisant, la pression augmente dans la chambre de travail qui agit également sur la première face 44 du piston 42. Lorsque la pression dans la chambre de travail 24 dépasse une valeur prédéterminée le piston 42 se déplace selon la flèche B à l'encontre du ressort 78.

Sur la figure 4, on peut voir un premier exemple d'une caractéristique C1 effort à la pédale en fonction de la course à la pédale, ce qui est sensiblement équivalent à la réaction sur le piston 42 en fonction du déplacement de celui-ci.

La caractéristique C1 comporte un première partie P1 correspondant au début du déplacement du piston 42 qui a pour effet de comprimer le ressort 78, les intervalles I1, I2, I3, I4, I5 voient leur longueur d diminuer simultanément. La dimension d des intervalles I1, I2, I3, I4, I5 est supérieure à la dimension e1, les zones de spires S1 et S2 ne sont alors pas encore en contact avec la zone de spire Z1.

Lorsque d est égale à e1, les zones de spires S1 et S2 entre en contact avec la zone de spire Z1, la zone de spire S1 ne peut alors plus se rapprocher de la zone de spire S1, la zone de spire S2 est dite alors inactive ce qui provoque une augmentation de la raideur du moyen élastique 48 et une augmentation de la pente de la caractéristique C1.

Le ressort 78 continue à se déformer de manière élastique provoquant l'appui progressif et continu des spires S2 et S3 contre la spire Z1 du moyen d'entretoise 80, la spire S3 devient alors inactive provoquant une nouvelle augmentation de la raideur du moyen élastique et par conséquent de la pente de la caractéristique C1.

La variation de la pente se fait de manière continue, ce qui correspond à une sensation pédale très proche de la sensation ressentie avec un circuit de freinage classique.

Si le conducteur continue à augmenter sa force d'application sur la pédale de frein, le piston 42 continue à comprimer le ressort 78 provoquant de nouveaux contacts entre les spires du ressort 78 et les spires du moyen d'entretoise et des augmentations successives de la pente de la caractéristique.

Lorsque toutes les spires du ressort 78 séparées par un moyen d'entretoise 80 seront en contact avec les spires du moyen d'entretoise 80, la caractéristique C1 aura un pente de raideur constante jusqu'à ce que les spires du ressort non séparées par un spire du moyen d'entretoise et donc susceptibles encore de se rapprocher pour une force d'application croissante entre simultanément en contact, le ressort ne peut plus se comprimer de manière élastique ce qui ne correspond plus à un fonctionnement normal du maître-cylindre.

Par conséquent, le moyen élastique 48 correspond à un ressort à pas variable modifiable.

Un moyen élastique comportant un ressort à pas variable et un moyen d'entretoise muni de spire de dimension axial constante ou non ne sort pas du cadre de la présente invention.

Sur les figures 4, 5 et 6, on peut voir des caractéristiques C1, C2 et C3 pour une dimension axiale maximale des spires Zn du moyen d'entretoise disposées entre les spires Sn du ressort 78 croissante, cette variation est obtenu au moyen du dispositif d'ajustage par dévissage du moyen d'entretoise 80 dans le ressort 78 ou déplacement angulaire de l'entretoise dans le sens de la flèche E. Ceci provoque un allongement de la zone de début du freinage correspondant à l'absorption d'un circuit classique..

Il est bien entendu que l'axe Y de la cartouche peut être orienté de toute autre manière que perpendiculairement à l'axe X du corps du maître-cylindre

Sur la figure 7, on peut voir un système de freinage électro-hydraulique selon la présente invention comportant un maître-cylindre MC selon la présente invention actionné par la tige d'actionnement 18 reliée à une pédale de frein 86, des moyens de détection 88 du déplacement longitudinal de la tige d'actionnement 18 par exemple des capteurs de courses, un calculateur 90 recevant les informations des moyens de détection 88 et générant des ordres de commande pour provoquer l'actionnement de freins 92, un générateur de pression 94 par exemple une pompe électrique recevant l'ordre du calculateur 90 d'envoyer du liquide sous pression dans les freins 92 et des électrovannes 96 pour interrompre la communication entre le maître-cylindre et les freins en fonctionnement normal, celles-ci étant ouvertes au repos et en fonctionnement dégradé.

Lors d'une action du conducteur sur la pédale de frein 86, les moyens de détection 88 envoie l'information au calculateur 90 qui génère l'ordre à la pompe 94 d'envoyer du liquide sous pression dans les freins 92. Un réaction simulée correspondant à un circuit de freinage classique est transmise au conducteur par la pédale de frein lui donnant la possibilité d'ajuster son niveau de freinage.

Il est bien entendu qu'un maître-cylindre comportant un seul circuit hydraulique formé d'une chambre d'alimentation et d'une chambre de pression, la chambre de pression étant raccordée à une cartouche de simulation de la sensation pédale comportant un moyen élastique selon la présente invention ne sort pas du cadre de la présente invention

Nous avons bien réalisé un maître-cylindre comportant des moyens de simulation de la sensation pédale efficace et de réalisation simple, et permettant avantageusement une adaptation simple et rapide de ces maîtres-cylindres sur différents modèles de véhicule la technique et/ou une adaptation au souhait du conducteur du véhicule.

La présente invention s'applique notamment à l'industrie automobile.

La présente invention s'applique notamment à l'industrie du freinage pour véhicule automobile et notamment à l'industrie du freinage pour voiture particulière.

## Revendications

1. Maître-cylindre pour systèmes de freinage électro-hydraulique comportant un corps (2) d'axe longitudinal (X) percé d'un alésage (4), un piston (10) monté .à coulissement étanche dans l'alésage et divisant axialement l'alésage en une chambre d'alimentation (22) raccordée de manière étanche à un réservoir de liquide de frein (R) et en une chambre de travail (24), ledit piston étant commandé par une tige d'actionnement reliée à une pédale de frein, et une cartouche de simulation de la réaction d'un circuit de freinage à la pédale, ladite chambre de travail (24) étant en communication en fonctionnement normal avec l'intérieur de la cartouche (28) de simulation de la sensation pédale et en fonctionnement dégradé avec au moins un frein disposé au niveau d'une roue, ladite cartouche (28) comportant un piston (42) susceptible d'être soumis par une première face (44) au liquide de frein sous pression fourni par la chambre de travail (22), et soumis par une seconde face (46) à un moyen élastique (48) à raideur variable **caractérisé en ce que** le moyen élastique (48) comporte au moins un ressort hélicoïdal (78) et un moyen d'entretoise (80) disposé entre au moins deux spires (Sn) dudit ressort (78) et permettant l'appui desdites spires sur ledit moyen d'entretoise (80) au delà d'une valeur prédéterminée de pression du liquide de frein dans la chambre de travail (24).

2. Maître-cylindre selon la revendication 1 **caractérisé en ce que** le moyen d'entretoise (80) est formé par une hélice formant des spires (Zn).

3. Maître-cylindre selon la revendication 2 **caractérisé en ce que** l'hélice a une section de dimension selon l'axe longitudinale continûment croissante ou décroissante par portion d'hélice.

4. Maître-cylindre selon la revendication 1, 2 ou 3 **caractérisé en ce que** le moyen d'entretoise (80) est réalisé en matière plastique.

5. Maître-cylindre selon la revendication 1 à 4 **caractérisé en ce que** le ressort hélicoïdal (78) est à pas régulier.

6. Maître-cylindre selon l'une quelconque des revendications précédentes **caractérisé en ce que** le moyen d'entretoise comporte une seconde extrémité longitudinale (83) monté fixe par rapport au piston (42) de la cartouche (28).

7. Maître-cylindre selon l'une quelconque des revendications précédentes **caractérisé en ce que** la cartouche (28) comporte des moyens d'ajustement de la sensation pédale simulée par modification de la position axiale du moyen d'entretoise (80) relativement au ressort (78).

8. Maître-cylindre selon la revendication précédente **caractérisé en ce que** lesdits moyens d'ajustement comporte un moteur électrique pas à pas permettant un déplacement longitudinal et en rotation du moyen d'entretoise (80).

9. Système de freinage électro-hydraulique comportant des moyens de détection 88 de l'action de freinage du conducteur, un calculateur 90 recevant les informations des moyens de détection 88 et générant des ordres de commande pour provoquer l'actionnement d'au moins un frein 92 disposé au niveau d'une roue, un générateur de pression 94 recevant l'ordre du calculateur 90 d'envoyer du liquide sous pression dans les freins 92, un maître-cylindre permettant la simulation de la sensation pédale en fonctionnement normal et servant de source de liquide de frein sous pression en fonctionnement dégradé, et des électrovannes 96 pour interrompre la communication entre ledit maître-cylindre et les freins en fonctionnement normal, **caractérisé en ce que** ledit maître-cylindre est un maître-cylindre selon l'une quelconque des revendications précédentes.

10. Système de freinage selon la revendication précédente **caractérisé en ce que** le générateur de pression (94) est une pompe électrique.

## Claims

1. Master cylinder for electro-hydraulic braking systems comprising a body (2) of longitudinal axis (X) pierced with a bore (4), a piston (10) mounted to slide in sealed fashion in the bore and axially dividing the bore into a supply chamber (22) sealedly connected to a brake fluid reservoir (R) and a working chamber (24), the said piston being operated by an actuating rod connected to a brake pedal, and a cartridge simulating the reaction of a braking circuit at the pedal, the said working chamber (24) in normal operation being in communication with the inside of the cartridge (28) simulating the pedal feel and in degraded operation being in communication with at least one brake arranged at a wheel, the said cartridge (28) comprising a piston (42) able to be subjected, via a first face (44) to the pressurized brake fluid supplied by the working chamber (22) and subjected via a second face (46) to a variable-stiffness elastic means (48), **characterized in that** the elastic means (48) comprises at least one helical spring (78) and a spacer means (80) arranged between at least two turns (Sn) of the said spring (78) and allowing the said turns to press against the said spacer means (80) when the pressure of the brake fluid in the working chamber (24) exceeds a predetermined value.

2. Master cylinder according to Claim 1, **characterized in that** the spacer means (80) is formed of a helix forming turns (Zn).

3. Master cylinder according to Claim 2, **characterized in that** the helix has a cross section of which the dimension along the longitudinal axis continuously increases or decreases by helix portions.

4. Master cylinder according to Claim 1, 2 or 3, **characterized in that** the spacer means (80) is made of plastic.

5. Master cylinder according to Claims 1 to 4, **characterized in that** the helical spring (78) has a uniform pitch.

6. Master cylinder according to any one of the preceding claims, **characterized in that** the spacer means comprises a second longitudinal end (83) mounted fixedly with respect to the piston (42) of the cartridge (28).

7. Master cylinder according to any one of the preceding claims, **characterized in that** the cartridge (28) comprises means of adjusting the simulated pedal feel by altering the axial position of the spacer means (80) relative to the spring (78).

8. Master cylinder according to the preceding claim, **characterized in that** the said adjusting means comprise a stepping electric motor allowing the spacer means (80) to be moved longitudinally and rotationally.

9. Electro-hydraulic braking system comprising means 88 of detecting the braking action of the driver, a computer 90 receiving the information from the detection means 88 and generating commands to actuate at least one brake 92 arranged at a wheel, a pressure generator 94 receiving the command from the computer 90 to send pressurized fluid to the brakes 92, a master cylinder allowing the pedal feel to be simulated under normal operation and serving as a source of pressurized brake fluid in degraded operation, and electrically operated valves 96 to interrupt the communication between the said master cylinder and the brakes in normal operation, **characterized in that** the said master cylinder is a master cylinder according to any one of the preceding claims.

10. Braking system according to the preceding claim, **characterized in that** the pressure generator (94) is an electric pump.

## Patentansprüche

1. Hauptzylinder für ein elektrohydraulisches Bremssystem, mit einem mit einer Bohrung (4) durchsetzten Körper (2) mit einer Längsache (X), einem Kolben (10), der in dichter Weise gleitend in der Bohrung angebracht ist und die Bohrung axial in eine in dichter Weise mit einem Bremsflüssigkeitsbehälter (R) verbundene Versorgungskammer (22) und in eine Arbeitskammer (24) unterteilt, wobei der Kolben über eine mit einem Bremspedal verbundene Betätigungsstange gesteuert wird, und mit einer Kartusche zur Simulation der Reaktion eines Bremskreises auf das Pedal, wobei die Arbeitskammer (24) im normalen Betrieb mit dem Inneren der Kartusche (28) zur Simulation des Pedalgefühls und im eingeschränkten Betrieb mit mindestens einer auf Höhe eines Rads angeordneten Bremse verbunden ist, wobei die Kartusche (28) einen Kolben (42) aufweist, der über eine erste Fläche (44) der von der Arbeitskammer (24) bereitgestellten, unter Druck stehenden Bremsflüssigkeit und über eine zweite Fläche (46) einem elastischen Mittel (48) mit variabler Steifigkeit ausgesetzt sein kann, **dadurch gekennzeichnet, dass** das elastische Mittel (48) mindestens eine Schraubenfeder (78) und ein Zwischenelement (80) aufweist, das zwischen mindestens zwei Windungen (Sn) der Feder (78) angeordnet ist und über einem vorbestimmten Druckwert der Bremsflüssigkeit in der Arbeitskammer (24) die Abstützung der Windungen am Zwischenelement (80) ermöglicht.

2. Hauptzylinder nach Anspruch 1, **dadurch gekennzeichnet, dass** das Zwischenelement (80) durch eine Wendel gebildet ist, die Windungen (Zn) bildet.

3. Hauptzylinder nach Anspruch 2, **dadurch gekennzeichnet, dass** die Wendel einen Querschnitt hat, dessen Abmessungen wendelabschnittsweise entlang der Längsachse kontinuierlich zunehmen oder abnehmen.

4. Hauptzylinder nach Anspruch 1, 2 oder 3, **dadurch gekennzeichnet, dass** das Zwischenelement (80) aus Kunststoff besteht.

5. Hauptzylinder nach den Ansprüchen 1 bis 4, **dadurch gekennzeichnet, dass** die Schraubenfeder (78) eine gleichmäßige Steigung hat.

6. Hauptzylinder nach einem der vorhergehenden Ansprüche, **dadurch gekennzeichnet, dass** das Zwischenelement ein zweites Längsende (83) aufweist, das in Bezug auf den Kolben (42) der Kartusche (28) feststehend angebracht ist.

7. Hauptzylinder nach einem der vorhergehenden Ansprüche, **dadurch gekennzeichnet, dass** die Kartusche (28) Mittel zum Einstellen des simulierten Pedalgefühls durch Änderung der axialen Stellung des Zwischenelements (80) zur Feder (78) aufweist.

8. Hauptzylinder nach dem vorhergehenden Anspruch, **dadurch gekennzeichnet, dass** die Einstellmittel einen elektrischen Schrittmotor aufweisen, der eine Längsbewegung und eine Drehbewegung des Zwischenelements (80) ermöglicht.

9. Elektrohydraulisches Bremssystem mit Mitteln (88) zur Erfassung der Bremstätigkeit des Fahrers, einem Rechner (90), der die Informationen der Erfassungsmittel (88) empfängt und Steuerbefehle erzeugt, um die Betätigung mindestens einer auf Höhe eines Rads angeordneten Bremse (92) zu bewirken, einem Druckgenerator (94), der den Befehl des Rechners (90) empfängt, Druckflüssigkeit in die Bremsen (92) zu leiten, einem Hauptzylinder, der im normalen Betrieb die Simulation des Bremsgefühls ermöglicht und im eingeschränkten Betrieb als Quelle für unter Druck stehende Bremsflüssigkeit dient, und mit Magnetventilen (96) zur Unterbrechung der Verbindung zwischen dem Hauptzylinder und den Bremsen im normalen Betrieb, **dadurch gekennzeichnet, dass** der Hauptzylinder ein Hauptzylinder nach einem der vorhergehenden Ansprüche ist.

10. Bremssystem nach dem vorhergehenden Anspruch, **dadurch gekennzeichnet, dass** der Druckgenerator (94) eine elektrische Pumpe ist.
